# EUROPEAN PATENT SPECIFICATION

(11) **EP 0 921 019 B1**
(45) Date of publication and mention of the grant of the patent: **21.01.2004**
(21) Application number: 98122326.6
(22) Date of filing: 24.11.1998
(51) Int. Cl.: B60C 9/22, B60C 9/20

(54) **Tire with split belt edge reinforcement**
REIFEN MIT GÜRTELRANDVERSTÄRKUNG
Bandage pneumatique avec renforcement aux bords de la ceinture

(30) Priority: 03.12.1997 US 984529
(43) Date of publication of application: 09.06.1999
(73) Proprietor: THE GOODYEAR TIRE & RUBBER COMPANY, Akron, Ohio 44316-0001 (US)
(72) Inventor: Nguyen, Gia van, 6700 Arlon (BE); Close, Roland, 4790 Burg-Reuland (BE); Terver, Roland Andre, 7759 Roost (LU); Depouhon, Francois, 6700 Arlon (BE)
(74) Representative: Kutsch, Bernd

(56) References cited:
- EP-A- 0 370 749
- EP-A- 0 531 136
- US-A- 4 183 391
- US-A- 4 815 514

## Description

### BACKGROUND OF THE INVENTION

This invention relates to a pneumatic tire having a belt edge reinforcement.

Such belt edge reinforcement minimizes belt edge separation, improves high speed and handling performance by avoiding belt distortion which may be responsible for tire vibration and irregular wear.

The belt edge reinforcement can be a, e.g., 1 cm wide helically wound ribbon extending on both sides of the belt edge over 10 to 25% of the tread width. The high restriction effect achieved with this technology is often not required for tires up to a speed rating H (210 km/h). In such cases the belt edge reinforcement can advantageously be a spirally wound strip having the width of the reinforcement and wound in one or more spirals without lateral displacement on both lateral edges of the belt. Such a reinforcement can be made faster with less costly building machines; the intermediate material, i.e. the strip, is also less costly to manufacture. This restriction presents an overlapping splice at its ending. During the expansion of the green tire in the curing mold, the gliding of the splice ending on the belt may induce a belt distortion, commonly called "belt necking".

It is an object of the invention to improve uniformity of tires and more specifically to reduce belt necking during shaping and vulcanizing of such tires.

It is a further object of the invention to use high modulus material for reinforcing the belt edge strips.

### SUMMARY OF THE INVENTION

The invention relates to a pneumatic tire having a pair of axially spaced annular beads, at least one carcass ply wrapped around said beads, at least two belt plies disposed over the carcass ply in a crown area of the tire, tread rubber disposed over the belt plies, sidewalls disposed between the tread rubber and the beads wherein the sidewalls and tread rubber meet in shoulder areas of the tire, and a belt edge reinforcement in each shoulder area of the tire. The belt edge reinforcement comprises an elastomeric strip which has parallel reinforcing cords therein, and the strip is disposed in the shoulders of the tire such that the parallel reinforcing cords have a specific angle with respect to the equatorial plane of the tire. The belt edge reinforcement comprises at least one turn of the strip and each strip has an overlap splice so as to have a radially inner and a radially outer end; during shaping of the tire in the curing mold, each end has a direction of gliding "s". The tension vectors "b" of the cords of the belt plies form acute angles with the direction of gliding "s" of the neighboring radially inner splice ending of the strips.

A specifically illustrated tire of the invention, is a passenger tire comprising a carcass having one radial ply reinforced by textile material such as polyester or rayon, a belt structure with two plies reinforced by steel cords inclined at 18° - 23° with respect to the circumferential plane of the tire. A spirally wound belt edge reinforcement strip, reinforced by nylon cords, having a width of 5% to 40%, preferably of 20% to 30% of the tread width TW is provided on each lateral edge of the belt structure. The strip is laid down on the tire building drum so as to have an overlapped splice of 20 mm to 40 mm.

### DEFINITIONS

The invention may be better understood in the context of the following definitions, which are applicable both to the specification and to the appended claims:
"Pneumatic Tire" means a laminated mechanical device of generally toroidal shape (usually an open-torus) having beads and a tread and made of rubber, chemicals, fabric and steel or other materials. When mounted on the wheel of a motor vehicle, the tire through its tread provides traction and contains the fluid that sustains the vehicle load.
"Equatorial plane" (EP) means the plane perpendicular to the tire's axis of rotation and passing through the centre of its tread.
"Cord" refers to the strands reinforcing the plies in the tire.
"Cord angle" means the angle, left or right in a plan view of the tire, formed by a cord with respect to the equatorial plane.
"Ply" means a layer of rubber-coated parallel cords.
"Bead" means that part of the tire comprising an annular tensile member wrapped by ply cords and shaped, with or without other reinforcement elements such as flippers, chippers, apexes, toe guards and chafers, to fit the design rim.
"Radial-ply tire" means a belted or circumferentially-restricted pneumatic tire in which the ply cords which extend from bead to bead are laid at cord angles between 65° and 90° with respect to the equatorial plane of the tire.
"Carcass" means the tire structure apart from the belt structure, tread, undertread, and sidewall rubber over the plies, but including the beads.
"Belt structure" means at least two layers or plies of parallel cords, woven or unwoven, underlying the tread, unanchored to the bead, and having both left and right cord angles with respect to the equatorial plane of the tire. For passenger tires, the angles are in the range from 17° to 27° with respect to the equatorial plane.
"Sidewall" means that portion of a tire between the tread and the bead.
"Tread" means that portion of a tire that comes into contact with the road when the tire is normally inflated and under normal load.
"Aspect ratio" of the tire means the ratio of its section height to its section width, multiplied by 100% for expression as a percentage.
"Innerliner" means the layer or layers of elastomer or other material that form the inside surface of a tubeless tire and that contain the inflating fluid within the tire.

### BRIEF DESCRIPTION OF THE DRAWINGS

Fig. 1 is a cross-sectional view of a vulcanized tire according to the invention.
Fig. 2 is an elevated partial view of the belt area of a vulcanized tire according to a first embodiment of the invention.
Fig. 3 is an elevated partial view of the belt area of a vulcanized tire according to a second embodiment of the invention.
Fig. 4 is a schematic representation of a portion of the belt area of a tire according to the invention before vulcanization.

### DETAILED DESCRIPTION OF THE INVENTION

The belt edge reinforcement strip is a cord/rubber composite material wherein the cord reinforcement may be made of metal or textile material, such as for instance steel, aramid, polyamide, polyester or polyalkylene. In the preferred embodiment, nylon (a polyamide) cord is used.

Specifically, in the illustrated embodiment, the belt edge reinforcement strip comprises 840/2 nylon 6.6 cords that have an untreated gauge of 0.56 mm, and a composite gauge of 0.80 mm (0.12 mm rubber are added to each side of the belt edge reinforcement fabric).

The cords in the reinforcement strip are oriented at from 0° to 30° relative to the equatorial plane (EP) of the tire. In the illustrated embodiment, a 0° to 5° cord angle is used.

It is believed that tires made with a close to 0° cord angle reinforcement in the belt edge reinforcement strip will demonstrate improved durability, whereas reinforcement strips having a cord angle close to 30° with respect to the equatorial plane will demonstrate improved handling.

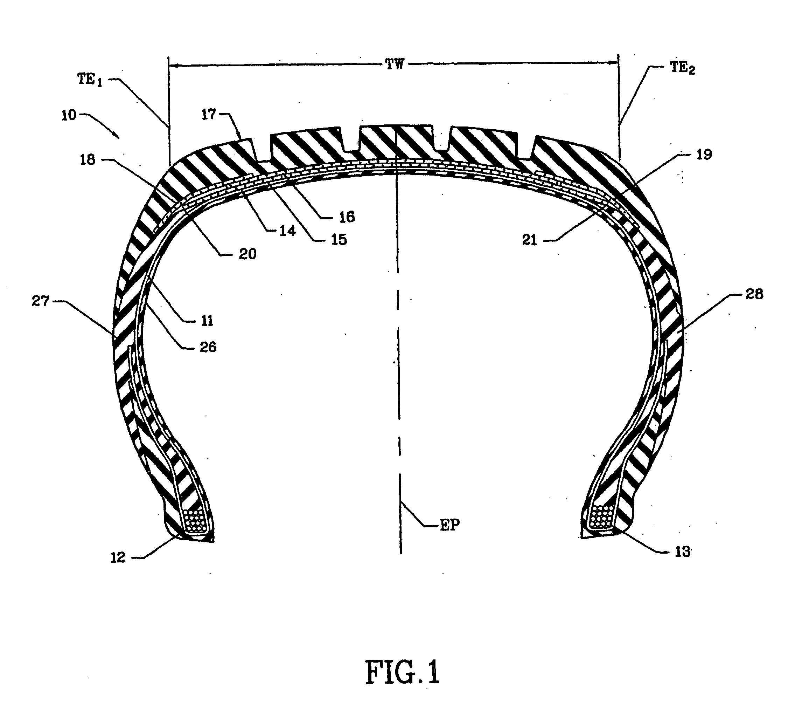

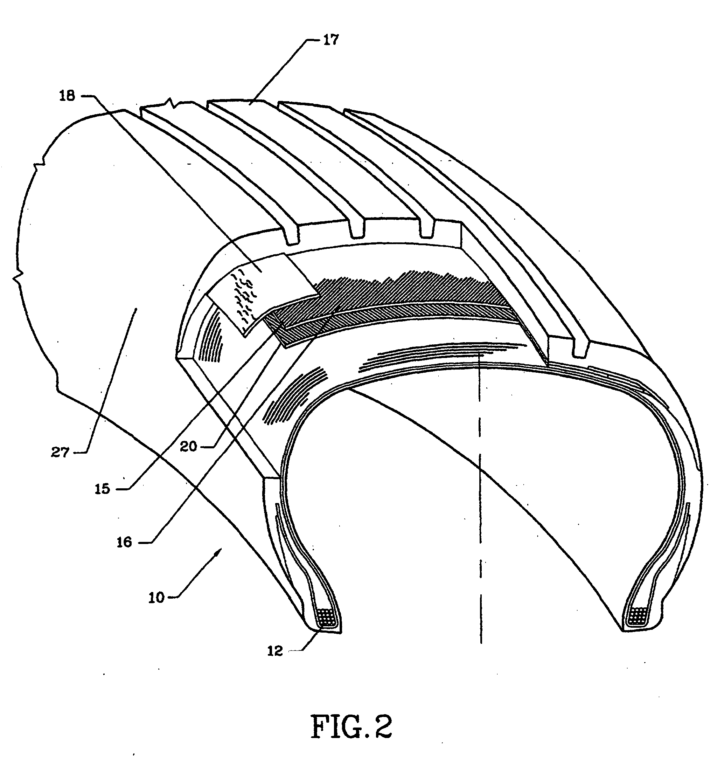

With reference now to Figs. 1 and 2, the tire 10 of the invention has carcass plies 11 wrapped around beads 12, 13 and a belt package 14 disposed over the carcass plies in a crown area of the tire. Tread 17 is disposed over belt package 14, and sidewalls 27, 28 are disposed between tread edges TE₁, TE₂ and beads 12, 13. A tread base (not represented) may be disposed between tread 17 and belt package 14. In the illustrated embodiment, belt package 14 comprises a radially inner first belt ply 15 and adjacent thereto a second radially outer top belt ply 16. A belt edge reinforcement strip 18, 19 is disposed in the region of each of the lateral belt edges. In the case of Fig. 2 the strip is disposed on top of the radially outermost belt ply.

The belt edge reinforcement strips 18, 19 comprise a sufficient number of layers or turns needed to have the required reinforcement properties. In the illustrated embodiment, each belt edge reinforcement strip comprises one layer or turn. The belt edge reinforcement strips 18, 19 are each about 50 mm wide and extend preferably slightly beyond belt edges 20, 21 of an adjacent belt ply radially inward of the strip.

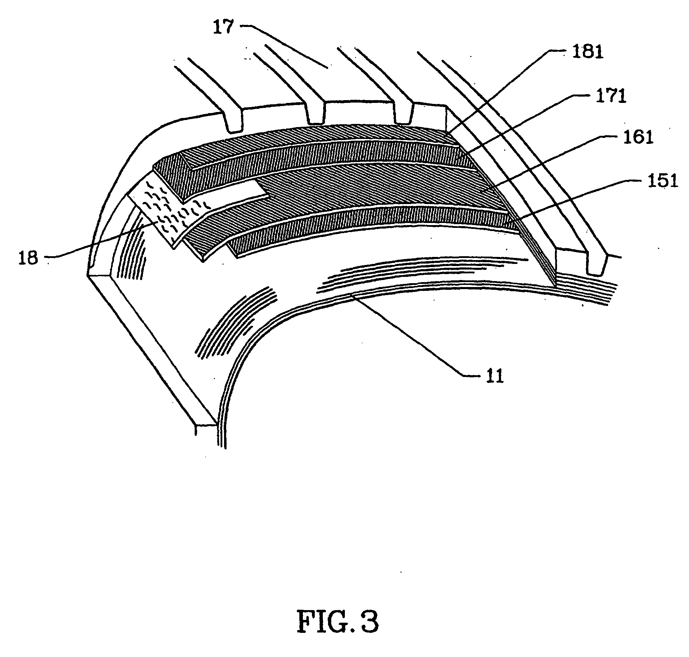

Fig. 3 shows schematically the belt package of a truck tire. The belt package includes a first radially innermost ply 151, a second ply 161, a third ply 171 and a fourth, radially outermost ply 181, having cord angles respectively of about 55° right, 19° right, 19° left and 19° right. The plies in the belt structure are reinforced by steel cords. The textile cord reinforced strips 18, 19 are located between the second ply 161 and the third ply 171. Those skilled in the art will recognize that other positions between the belts are possible.

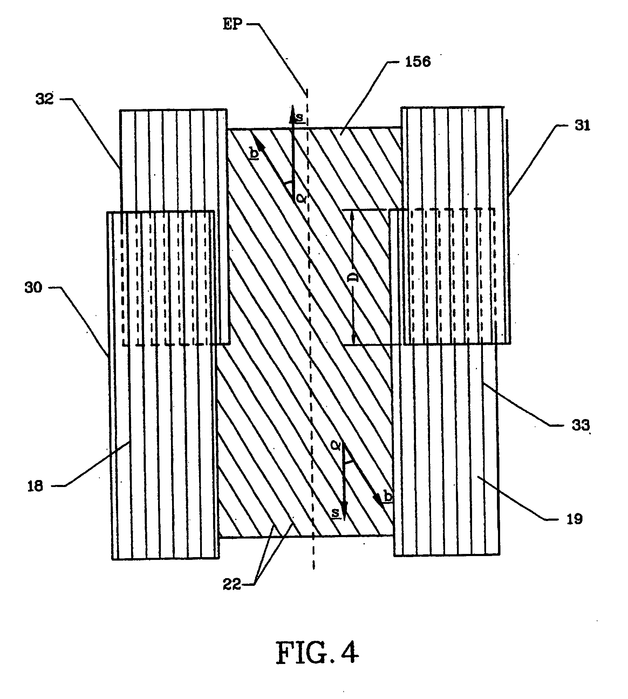

As can best be seen in Fig. 4, the belt edge reinforcement strips 18,19 are laid up having an overlap splice. The overlap splice is provided to guarantee that there are no gaps to weaken the belt edge reinforcement strip and to ensure that no air is trapped in the area of the overlap. Trapped air would lead to the possibility of ply separations. Those skilled in the art will recognize that tire building machines have means to prevent or eliminate such trapping of air.

Fig. 4 shows further the radially outer end portions 30 and 31 and radially inner end portions 32 and 33 of respectively the strips 18 and 19. Tension vectors "b" of the reinforcement cords 22 of the neighbouring belt ply 156, radially inner to the strips, are represented. The tension vectors take their origin in the reinforcement cords at which point they are tangent to the cord. They are directed from the equatorial plane EP towards the respective belt edges; their intensity decreases the closer the point of origin is to the belt edge. The tension vectors "b" form an angle of 17° to 27° with the equatorial plane.

During the 2 to 4% expansion of the green tire in the curing mold, the splice endings glide on each other in a direction parallel to the equatorial plane, tending to reduce the amount of overlap D. Both splice endings glide on the adjacent belt plies. The gliding direction and amount of gliding of the radially inner splice ending is represented by vector "s". In Fig. 4, gliding vector "s" of each strip has been represented with the tension vectors "b" of the corresponding adjacent radially inner reinforcement cords 22.

It has been discovered that depending on the angle α, formed by the tension vector "b" of the cords of the adjacent belt ply, radially inner to the strip, and the gliding vector "s", this gliding of the splice ending in contact with the belts may induce a belt distortion, commonly called "belt necking".

When reinforcement strips 18,19 slip in the direction of the acute angle of cords 22, the acute angle makes slipping of the strips on the underlying cords 22 easier, like stroking a feather with the grain, and there is less distortion, and if there is distortion, it is through the slight closing of an already acute cord angle. Put in other words, if the direction of gliding "s" of each radially inner splice ending 32,33 forms an acute angle (α) with the tension vector (b) of the neighbouring belt cords 22, the gliding of the splice ending does not cause a marked displacement of the cords 22 and no belt necking is observed.

Conversely, if the direction of slip is against the obtuse angle of the underlying belt cords 22, the cords resist the slip, like stroking against the grain of a feather, and the cords are displaced in the direction of slippage of the radially inner end portion of the strip, creating significant distortion. If during the gliding, the radially inner splice ending 32,33 moves in a direction "s" making an obtuse angle with the tension vector of the adjacent cord of the radially inner belt ply, a displacement of a part of the belt cords will occur during the tire shaping. The cord displacement in the belt will lead to an asymmetric belt package (uneven step-off), hence to tire vibration and irregular wear. The amount of displacement depends on the amount of gliding of the radially inner splice ending; it is accentuated by the fact that the belt package is put into compression by the belt edge reinforcement due to the tire expansion in the curing mold. The level of distortion is strongly depending on the clearance between the green tire and the mold as well as on the modulus of the fabric material constituting the cords; the higher the modulus, the higher the compression force exerted on the belt ply sandwiched between the bladder and the strip.

It is true that portions of the strip 18,19 further away from the radially outer splice ending 30,31 are in contact with the belt cords 22. Moreover the gliding vectors of these cords form in the lay-up according to the invention obtuse angles with the respective tension vector of the belt cords 22. It has however been observed that no noticeable displacement of these belt cords is induced hereby. This may be due to the fact that the pressure applied by the radially inner portion of the splice ending 32,33 is greater because of the increased gauge at the overlap; it is also believed that the action of the radially inner splice ending 32,33 on the adjacent cords 22 embedded in the belt ply 156 prevails and tends to maintain the cords 22 which are in contact with the radially outer splice ending 30,31 in position.

The present invention encompasses constructions where a reinforcement strip is placed between the belts as e.g. shown in Fig. 3 for strip 18 located between belts 161 and 171. Surprisingly it has been observed that an adjacent belt ply, which is radially outer to the strip, is not significantly distorted. Here at the location of the overlap, where the gauge is highest, the tension vectors "b" of the cords of this belt ply form acute angles with the direction of gliding "s" of the neighbouring radially outer splice ending. The lack of distortion may further be explained by the fact that during the shaping of the tire, the bladder pushes the cords of a belt against the adjacent -radially outer-cords of the strip which are thereby influenced in their movement by the gliding movement of the strip cords, whereas the cords of the belt ply which are radially outer to the strip are pushed through the bladder movement against the soft tread rubber.

For ease and efficiency of building the green tire on a drum, the two splice endings of the belt edge reinforcement strip are normally not circumferentially shifted but are located within a solid angle of about 20°, the solid angle being formed by two semi-planes originating on the axis of the tire. However, in order to increase tire uniformity, it is recommended to have the splice of the belt edge reinforcement strip on one side of the equatorial plane circumferentially shifted around the building drum by about 180° with respect to the splice located on the opposite side of the equatorial plane.

The invention is further illustrated with reference to Table 1.

**TABLE I**

| **TIRE** | **FEATURE** | **PERFORMANCE** |
|---|---|---|
| Size: 175/70R13H NCT2 | Tire according to the invention with a strip on the radially outermost belt | No Belt Necking |
| | Tire with a strip on the radially outermost belt according to the prior art | Belt Necking |
| Size: 195/-60R15H NCT2 | Tire according to the invention with a strip on the radially outermost belt | Hi-Speed: 280/280 kmph |
| | Tire with a strip on the radially outermost belt according to the prior art | Hi-Speed: 250/260 kmph |
| Size: 185/70R14H NCT2 | Tire according to the invention with a strip on the radially outermost belt | Hi-Speed: 230/230 kmph |
| | Tire according to the invention with a strip on the radially outermost belt | Hi-Speed: 230/230 kmph |
| | Tire with a strip on the radially outermost belt according to the prior art | Hi-Speed: 200/200/ kmph |

Though the invention has been explained more specifically with the split fabric restriction laid on top of belt 2, it is understood that the invention works equally well with tires having three or more belts, by positioning the strips between any of the belts or on top of the radially outermost belt.

Although specific embodiments of the invention have been illustrated and described, those skilled in the art will recognize that the invention may be variously modified and practiced without departing from the invention as defined by the following claims.

## Claims

1. A pneumatic tire (10) having a pair of axially spaced annular beads (12, 13) at least one carcass ply (11) wrapped around said beads,
- a belt structure (14), disposed over said carcass ply(ies) in a crown area of said tire, with at least two plies (15, 16) reinforced by parallel cords (22), each cord having at any point a tension vector "b" tangent to the cord at that point and directed from the equatorial plane towards the nearest belt edge, forming an angle with respect to the equatorial plane, said belt plies having each two lateral edges,
- tread rubber(17) disposed over said belt plies,
- sidewalls (27, 28) disposed between said tread rubber and said beads, said sidewalls and tread rubber meeting in shoulder areas of said tire,
- a cord reinforced strip (18, 19) near and radially above each of the edges of at least one of the belt plies, the belt edge reinforcement strip being applied in at least one layer; the strip having a circumferentially overlapping splice (D) so as to have a radially inner splice end and a radially outer splice end, each end having a direction of gliding "s" during shaping of the tire in the vulcanizing mold,
**characterized in that** the tension vectors "b" of the cords of the belt ply form acute angles α with the direction of gliding "s" of the neighbouring radially inner splice ending of said strips.

2. The pneumatic tire of claim 1 **characterized in that** said strip comprises elastomeric material with parallel reinforcing cords which are disposed at 0° to 45° with respect to the equatorial plane of the tire.

3. The pneumatic tire of claim 1 **characterized in that** said strip comprises elastomeric material with parallel reinforcing cords which are disposed at 0° to 5° with respect to the equatorial plane of the tire and wherein there are two layers of said strips.

4. The pneumatic tire of claim 1 **characterized in that** said strips are laid down to have an overlap splice of 20 mm to 50 mm.

5. The pneumatic tire of claim 1 **characterized in that** the strip has a width of 25 to 76 mm (1 inch to 3 inches).

6. The pneumatic tire of claim 1 **characterized in that** the amount of overlap of the strip on each side of the tire is substantially equal.

7. The pneumatic tire of claim 6 **characterized in that** the cords reinforcing the overlay strip are made of Nylon, polyester or aramid.

8. The pneumatic tire of claim 1 **characterized in that** the strip is located near the edges of the radially outermost belt ply.

9. The pneumatic tire of claim 1 **characterized in that** the splice of the strip on one side of the equatorial plane is circumferentially shifted around the tire by about 180° with respect to the splice of the strip located on the opposite side of the equatorial plane.

10. The pneumatic tire of claim 1 **characterized in that** the splices of the strips are located within a solid angle of 20°, the solid angle being formed by semi-planes passing through the axis of the tire.

## Patentansprüche

1. Ein Luftreifen (10), umfassend ein Paar axial beabstandeter ringförmiger Wulste (12,13), mindestens eine um diese Wulste gewickelte Karkassenschicht (11),
- eine auf diesen Karkassenschicht(en) in einem Kronenbereich besagten Reifens angebrachte Gürtelstruktur (14), wobei zumindest zwei Schichten (15, 16) durch parallele Korde (22) verstärkt sind, wobei jeder Kord an jedem Punkt tangential zum jeweiligen Kord an diesem Punkt einen Spannungsvektor "b" aufweist, der von der Äquatorialebene zum nächstgelegenen Gürtelrand gerichtet ist und einen Winkel bezüglich der Äquatorialebene bildet, wobei besagte Gürtelschichten jeweils zwei seitliche Ränder aufweisen,
- Laufstreifengummi (17), das über besagten Gürtelschichten angebracht ist,
- Seitenwände (27, 28), die zwischen besagtem Laufstreifengummi und besagten Wulsten angeordnet sind, wobei besagte Seitenwände und das Laufstreifengummi in Schulterbereichen besagten Reifens aufeinandertreffen,
- ein kordverstärkter Streifen (18, 19) nahe und radial oberhalb der Ränder von zumindest einer der Gürtelschichten, wobei der Gürtelrandverstärkungsstreifen in zumindest einer Schicht aufgebracht wird, wobei der Streifen eine im Umfang überlappende Spleißstelle (D) besitzt, so dass er ein radial inneres Spleißstellenende und ein radial äußeres Spleißstellenende aufweist, wobei jedes Ende während des Formens des Reifens in der Vulkanisationsform eine Gleitrichtung "s" aufweist,
**dadurch gekennzeichnet, dass** die Spannungsvektoren "b" der Korde der Gürtelschicht spitze Winkel α mit der Gleitrichtung "s" des benachbarten radial inneren Spleißstellenendes besagter Streifen bilden.

2. Luftreifen nach Anspruch 1, **dadurch gekennzeichnet, dass** besagter Streifen Elastomerenmaterial mit parallelverstärkenden Korden umfasst, die von 0° bis 45° bezüglich der Äquatorialebene des Reifens angeordnet sind.

3. Luftreifen nach Anspruch 1, **dadurch gekennzeichnet, dass** besagter Streifen Elastomerenmaterial mit parallelverstärkenden Korden umfasst, die von 0° bis 5° bezüglich der Äquatorialebene des Reifens angeordnet sind, wobei es zwei Lagen dieser Streifen gibt.

4. Luftreifen nach Anspruch 1, **dadurch gekennzeichnet, dass** besagte Streifen so angeordnet sind, dass sie eine überlappende Spleißstelle von 20 mm bis 50 mm aufweisen.

5. Luftreifen nach Anspruch 1, **dadurch gekennzeichnet, dass** der Streifen eine Breite von 25 mm bis 76 mm (1 Zoll bis 3 Zoll) aufweist.

6. Luftreifen nach Anspruch 1, **dadurch gekennzeichnet, dass** die Größe des Überlapps des Streifens auf beiden Seiten des Reifens im Wesentlichen gleich ist.

7. Luftreifen nach Anspruch 6, **dadurch gekennzeichnet, dass** die den Überlappungsstreifen verstärkenden Korde aus Nylon, Polyester oder Aramid hergestellt sind.

8. Luftreifen nach Anspruch 1, **dadurch gekennzeichnet, dass** sich der Streifen nahe am Rand der radial äußersten Gürtelschicht befindet.

9. Luftreifen nach Anspruch 1, **dadurch gekennzeichnet, dass** die Spleißstelle des Streifens auf einer Seite der Äquatorialebene um ungefähr 180° um den Reifenumfang verschoben ist bezüglich der auf der anderen Seite der Äquatorialebene liegenden Spleißstelle des Streifens.

10. Luftreifen nach Anspruch 1, **dadurch gekennzeichnet, dass** die Spleißstellen der Streifen innerhalb eines Raumwinkels von 20° liegen, wobei der Raumwinkel von Halbebenen gebildet wird, die durch die Reifenachse gehen.

## Revendications

1. Bandage pneumatique (10) possédant une paire de talons annulaires (12, 13) espacés en direction axiale, au moins une nappe de carcasse (11) entourant lesdits talons,
- une structure de ceintures (14) disposée par-dessus ladite ou lesdites nappes de carcasse dans une zone de couronne dudit bandage pneumatique comprenant au moins deux nappes (15, 16) renforcées par des câblés parallèles (22), chaque câblé possédant à n'importe quel endroit un vecteur de tension "b" tangent au câblé à cet endroit et orienté depuis le plan équatorial en direction du bord de ceinture le plus proche, en formant un angle par rapport au plan équatorial, lesdites nappes de ceintures possédant chacune deux bords latéraux,
- un caoutchouc de bande de roulement (17) disposé par-dessus lesdites nappes de ceintures,
- des flancs (27, 28) disposés entre ledit caoutchouc de bande de roulement et lesdits talons, lesdits flancs et ledit caoutchouc de bande de roulement se rencontrant dans les zones d'épaulements dudit bandage pneumatique,
- une bande renforcée avec des câblés (18, 19) à proximité et au-dessus, en direction radiale, de chacun des bords d'au moins une des nappes de ceintures, la bande de renforcement du bord de ceinture étant appliquée dans au moins une couche, la bande possédant une soudure à recouvrement (D) en direction circonférentielle de façon à disposer d'une extrémité de soudure interne en direction radiale et d'une extrémité de soudure externe en direction radiale, chaque extrémité possédant une direction de glissement "s" lors du façonnement du bandage pneumatique dans le moule de vulcanisation, **caractérisé en ce que** les vecteurs de tension "b" des câblés des nappes de ceintures forment des angles aigus α avec la direction de glissement "s" de l'extrémité voisine de soudure interne en direction radiale desdites bandes.

2. Bandage pneumatique selon la revendication 1, **caractérisé en ce que** ladite bande comprend une matière élastomère comprenant des câblés de renforcement parallèles qui sont disposés en formant un angle de 0 ° à 45 ° par rapport au plan équatorial du bandage pneumatique.

3. Bandage pneumatique selon la revendication 1, **caractérisé en ce que** ladite bande comprend une matière élastomère comprenant des câblés de renforcement parallèles qui sont disposés en formant un angle de 0 ° à 5 ° par rapport au plan équatorial du bandage pneumatique, et dans lequel on prévoit deux couches desdites bandes.

4. Bandage pneumatique selon la revendication 1, **caractérisé en ce que** lesdites bandes sont posées pour obtenir une soudure à recouvrement de 20 mm à 50 mm.

5. Bandage pneumatique selon la revendication 1, **caractérisé en ce que** la bande possède une largeur de 25 à 76 mm (de 1 pouce à 3 pouces).

6. Bandage pneumatique selon la revendication 1, **caractérisé en ce que** l'ampleur du recouvrement de la bande de part et d'autre du bandage pneumatique est essentiellement égale.

7. Bandage pneumatique selon la revendication 6, **caractérisé en ce que** les câblés renforçant la bande de recouvrement sont réalisés en Nylon, en polyester ou en aramide.

8. Bandage pneumatique selon la revendication 1, **caractérisé en ce que** la bande est disposée à proximité des bords de la nappe de ceinture située le plus à l'extérieur en direction radiale.

9. Bandage pneumatique selon la revendication 1, **caractérisé en ce que** la soudure de la bande d'un côté du plan équatorial est soumise à un décalage en direction circonférentielle autour du bandage pneumatique à concurrence d'environ 180 degrés par rapport à la soudure de la bande disposée sur le côté opposé du plan équatorial.

10. Bandage pneumatique selon la revendication 1, **caractérisé en ce que** les soudures des bandes sont disposées en-deçà d'un angle plein de 20 °, l'angle plein étant formé par des demi-plans passant par l'axe du bandage pneumatique.
